# EUROPÄISCHE PATENTANMELDUNG

(11) **EP 2 677 191 A2**
(43) Veröffentlichungstag der Anmeldung: **25.12.2013**
(21) Anmeldenummer: 13172745.5
(22) Anmeldetag: 19.06.2013
(51) Int. Cl.: F16D 55/2255, F16D 65/56, F16D 66/02

(54) **Verschleißnachstellvorrichtung einer Scheibenbremse und entsprechende Scheibenbremse**

(30) Priorität: 22.06.2012 DE 102012012473
(71) Anmelder: KNORR-BREMSE Systeme für Nutzfahrzeuge GmbH, 80809 München (DE)
(72) Erfinder: Baumgartner, Johann, 85368 Moosburg (DE); Weggartner, Robert, 84347 Pfarrkirchen (DE); Kielbasa, Rudolf, 85757 Karlsfeld (DE); Werth, Alexander, 80999 München (DE)

(57) **Zusammenfassung**

Eine Verschleißnachstellvorrichtung (20) ist zur Einstellung eines vorher festgelegten Lüftspiels für eine Scheibenbremse (1), insbesondere für ein Kraftfahrzeug, mit einer Zuspannvorrichtung, vorzugsweise mit einem Drehhebel (8), wobei die Verschleißnachstellvorrichtung (20) mit der Zuspannvorrichtung, vorzugsweise mit dem Drehhebel (8), koppelbar und vorzugsweise in eine Spindeleinheit (5, 5') der Scheibenbremse (1) einsetzbar ist, bereitgestellt. Die Verschleißnachstellvorrichtung (20) weist eine Nachstelleinrichtung (10) und eine Rückstelleinrichtung (12) auf, wobei die Nachstelleinrichtung (10) ein Lüftspiel verkleinert, wenn dieses in Bezug auf das vorher festgelegte Lüftspiel zu groß ist, und ein Lüftspiel vergrößert, wenn dieses in Bezug auf das vorher festgelegte Lüftspiel zu klein ist. Eine Scheibenbremse (1) weist die Verschleißnachstellvorrichtung (20) auf.

## Beschreibung

Die Erfindung betrifft eine Verschleißnachstellvorrichtung einer Scheibenbremse, insbesondere für ein Kraftfahrzeug, nach dem Oberbegriff des Anspruchs 1. Die Erfindung bezieht sich auch auf eine entsprechende Scheibenbremse.

Derartige Scheibenbremsen sind üblicherweise druckluftbetätigt und mit automatisch wirkenden, mechanischen Verschleißnachstellvorrichtungen ausgestattet. Diese Verschleißnachstellvorrichtungen wirken sehr zuverlässig und verkleinern ein zu groß gewordenes Lüftspiel. Sie sind in unterschiedlichen Ausführungen bekannt, wie z.B. mechanische Nachsteller mit automatischem Einregeln eines Reibepunkts. Dabei wird bei jeder Bremsbetätigung die Verschleißnachstellvorrichtung, z.B. durch ein Zustellelement einer Zuspannvorrichtung der Scheibenbremse, aktiviert. Bei Verschleiß von Bremsbelägen und Bremsscheibe erfolgt ein automatisches Nachstellen der Beläge mittels der Verschleißnachstellvorrichtung z.B. durch eine Verstellbewegung von längenveränderlichen Druckstempeln. Ein Lüftspiel, das z.B. durch Wärmeausdehnung zu gering geworden ist, können sie jedoch nicht vergrößern.

Damit die automatische Nachstellung nicht ein zu kleines Lüftspiel einstellt, wird im Antrieb der Verschleißnachstellvorrichtung ein Spalt vorgehalten. Somit wird die Verschleißnachstellvorrichtung erst nach Überbrückung dieses Spalts, der auch als konstruktives Lüftspiel bezeichnet wird, angetrieben.

Ein Beispiel einer Verschleißnachstellvorrichtung beschreibt das Dokument DE 10 2004 037 771 A1. Dabei wird eine Antriebsdrehbewegung z.B. von einer Drehmoment-Begrenzungseinrichtung, beispielsweise mit einer Kugelrampe, über eine kontinuierlich wirkende Kupplung (Rutschkupplung) auf eine Verstellspindel eines Druckstempels weitergeleitet.

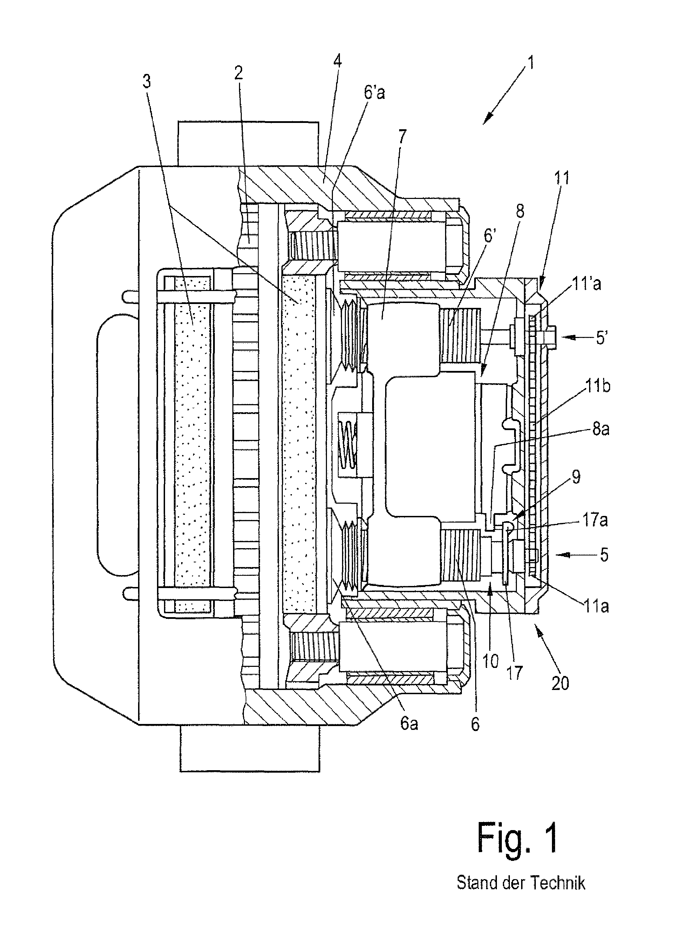

Eine übliche Scheibenbremse 1 mit einer Verschleißnachstellvorrichtung 20 illustriert Fig. 1 in einer schematische Schnittansicht.

Die Scheibenbremse 1 ist hier in einer Ausführung als zweistempelige Bremse mit zwei Spindeleinheiten 5, 5' gezeigt. Ein Bremssattel 4, hier als Schwimmsattel ausgeführt, übergreift eine Bremsscheibe 2, an welcher beidseitig jeweils ein Bremsbelag 3 angeordnet ist. Der zuspannseitige Bremsbelag 3 steht mit den Spindeleinheiten 5, 5' an Enden von Gewinderohren 6, 6' über Druckstücke 6a, 6'a in Verbindung. Der andere, reaktionsseitige Bremsbelag ist auf der anderen Seite der Bremsscheibe im Bremssattel 4 festgelegt. Die Gewinderohre 6, 6' sind jeweils in einer Traverse 7 verdrehbar angeordnet. Die Traverse 7 und somit die Gewinderohre 6, 6' sind von einem Drehhebel 8 parallel zur Drehachse der Bremsscheibe 2 betätigbar. Die Verschleißnachstellvorrichtung 20 umfasst hier eine Nachstelleinrichtung 10, die in die eine Spindeleinheit 5 der beiden Spindeleinheiten 5, 5' eingesetzt ist. Die Nachstelleinrichtung 10 ist hier als mechanische Nachstelleinrichtung ausgebildet und über eine Synchroneinrichtung 11 mit einem Mitnehmer, der in die andere Spindeleinheit 5' eingesetzt ist, gekoppelt. Die Synchroneinrichtung 11 umfasst hier ein Synchronrad 11' (hier ein Kettenrad) auf dem zuspannseitigen Ende der Nachstelleinrichtung 10, ein Synchronrad 11'a (hier ein Kettenrad) auf dem Mitnehmer und ein Synchronmittel 11 b, hier eine Kette. Damit ist eine synchrone Bewegung der Spindeleinheiten 5 und 5' bei Verschleißnachstellvorgängen gewährleistet.

Die Nachstelleinrichtung 10 steht über einen Antrieb 9 mit dem Drehhebel 8 in Zusammenwirkung. Der Antrieb 9 umfasst einen Betätiger 8a, welcher mit dem Drehhebel 8 verbunden ist, und eine Schaltgabel 17a der Nachstelleinrichtung 10.

Ein Abstand zwischen den Bremsbelägen 3 und der Bremsscheibe 2 wird als Lüftspiel bezeichnet. Infolge von Belag- und Scheibenverschleiß wird dieses Lüftspiel größer. Wenn dies nicht kompensiert wird, kann die Scheibenbremse 1 ihre Spitzenleistung nicht erreichen, da ein Betätigungshub der Betätigungsmechanik, d.h. hier der Betätigungshub bzw. ein Schwenkwinkel des Drehhebels 8, nicht mehr ausreicht.

Die Scheibenbremse 1 kann unterschiedliche Kraftantriebe aufweisen. Der Drehhebel 8 wird hier z.B. pneumatisch betätigt. Zu Aufbau und Funktion einer pneumatischen Scheibenbremse 1 wird auf die entsprechende Beschreibung der DE 197 29 024 C1 verwiesen.

Die Aufgabe der vorliegenden Erfindung besteht darin, eine verbesserte Verschleißnachstellvorrichtung zu schaffen.

Eine weitere Aufgabe ist, eine verbesserte Scheibenbremse bereitzustellen.

Die Aufgabe wird durch eine Verschleißnachstellvorrichtung mit den Merkmalen des Anspruchs 1, und eine Scheibenbremse mit den Merkmalen des Anspruchs 14 gelöst.

Es wird eine Verschleißnachstellvorrichtung bereitgestellt, welche sowohl eine Nachstelleinrichtung als auch eine Rückstelleinrichtung aufweist und ein vorher festgelegtes Lüftspiel verkleinern als auch vergrößern kann.

Eine erfindungsgemäße Verschleißnachstellvorrichtung zur Einstellung eines vorher festgelegten Lüftspiels für eine Scheibenbremse, insbesondere für ein Kraftfahrzeug, mit einer Zuspannvorrichtung, vorzugsweise mit einem Drehhebel, ist mit der Zuspannvorrichtung, vorzugsweise mit dem Drehhebel, koppelbar und vorzugsweise in eine Spindeleinheit der Scheibenbremse einsetzbar. Die Verschleißnachstellvorrichtung weist eine Nachstelleinrichtung und eine Rückstelleinrichtung auf, wobei die Nachstelleinrichtung ein Lüftspiel verkleinert, wenn dieses in Bezug auf das vorher festgelegte Lüftspiel zu groß ist, und ein Lüftspiel vergrößert, wenn dieses in Bezug auf das vorher festgelegte Lüftspiel zu klein ist.

Unter dem Begriff "Einstellung" ist eine Verschleißnachstellung bei zu großem Lüftspiel und eine Vergrößerung eines zu kleinen Lüftspiels gemeint.

Bei der Verschleißnachstellung erfolgt eine Verstellung des Bremsbelags/der Bremsbeläge in Richtung auf die Bremsscheibe zur Verkleinerung des Lüftspiels. Bei der Vergrößerung des Lüftspiels erfolgt eine Verstellung des Bremsbelags/der Bremsbeläge in Richtung von der Bremsscheibe weg zur Vergrößerung des Lüftspiels.

Das vorher festgelegte Lüftspiel ist z.B. das konstruktive Lüftspiel und ist von der Geometrie und Auslegung der Scheibenbremse bestimmt.

Das nominelle, vorher festgelegte Lüftspiel, kann automatisch wieder eingestellt werden, unabhängig davon, ob das aktuelle Lüftspiel zuvor zu groß oder zu klein war.

Die Funktionen Verkleinern des Lüftspiels und Vergrößern des Lüftspiels sind somit in zwei Justageeinrichtungen getrennt.

Eine erfindungsgemäße Scheibenbremse, vorzugsweise druckluftbetätigt, insbesondere für ein Kraftfahrzeug, mit einer Zuspannvorrichtung, vorzugsweise mit einem Bremsdrehhebel, mindestens einer Spindeleinheit, und mindestens einer Verschleißnachstellvorrichtung, welche mit der Zuspannvorrichtung, vorzugsweise mit dem Bremsdrehhebel, gekoppelt ist, weist die oben angegebene Verschleißnachstellvorrichtung auf.

Weitere vorteilhafte Ausgestaltungen sind in den Unteransprüchen angegeben.

In einer Ausführung ist vorgesehen, dass ein Antrieb der Nachstelleinrichtung und ein Antrieb der Rückstelleinrichtung gemeinsam mit der Zuspannvorrichtung, vorzugsweise mit dem Drehhebel, koppelbar sind. Dabei kann z.B. der Drehhebel jeweils einen Betätiger aufweisen, so dass die Antriebe gemeinsam von dem Drehhebel betätigbar sind. Dadurch ergibt sich ein kompakter Aufbau. Der Drehhebel dient mithin als Antrieb. Der Antrieb und die Nachstelleinrichtung sind damit rein mechanisch ausgelegt und weisen keine elektrischen Bauteile, wie Elektromotor auf, mit denen auch ein Rückstellen möglich wäre.

In einer weiteren Ausführung weist die Rückstelleinrichtung eine Schaltscheibe auf, welche Bestandteil des Antriebs der Rückstelleinrichtung ist. Die Schaltscheibe wird zwar zusammen mit einem Antriebselement der Nachstelleinrichtung angetrieben, aber die Rückstelleinrichtung ist durch die Schaltscheibe individuell und unabhängig von der Nachstelleinrichtung angetrieben.

Hierbei ist vorgesehen, dass die Schaltscheibe mit einer Steuerkontur versehen ist, die zur Zusammenwirkung mit einem Betätiger des Antriebs vorgesehen ist. Der Betätiger des Antriebs für die Rückstelleinrichtung wird in der Steuerkontur geführt, welche ihrerseits eine von der Steuerkontur abhängige Bewegung ausführt.

In einer weiteren Ausführung ist die Steuerkontur geradlinig mit parallel zueinander verlaufenden Steuerflanken ausgebildet und in Bezug auf eine Mittelachse der Schaltscheibe in einem Winkel, der vorzugsweise 10... 15° beträgt, angeordnet, wobei die Mittelachse der Schaltscheibe parallel zu einer Geraden verläuft, die durch eine Bewegung des Betätigers auf eine Fläche projiziert ist. Dadurch wird erreicht, dass die Bewegung des Betätigers anfänglich eine Verschwenkung der Schaltscheibe bewirkt, und dann ab einem Ablösepunkt die Schaltscheibe bei weiterer Zuspannung der Scheibenbremse nicht mehr bewegt.

In einer noch weiteren Ausführung weist die Rückstelleinrichtung weiterhin eine reibschlüssige Kugelkonuskupplung auf, die mit der Schaltscheibe gekoppelt ist, und eine Axialfeder aufweist. Über die Kugelkonuskupplung ohne Freilauf ist es möglich, dass die Bewegung der Schaltscheibe auf eine Welle der Rückstelleinrichtung und auf ein zugehöriges Gewinderohr der zugeordneten Spindeleinheit übertragen werden kann. Aufgrund des Reibschlusses der Kugelkonuskupplung ist einerseits eine Überlastkupplung gebildet und andererseits eine relative Verdrehung des zugehörigen Gewinderohrs zur Schaltscheibe möglich. Die Schaltscheibe in Zusammenwirkung mit der Kugelkonuskupplung ermöglicht ferner eine so genannte Schnellanlegefunktion der Scheibenbremse, wobei ab Beginn einer Zuspannung die Gewinderohre verdreht werden, so dass die Bremsbeläge auf die Bremsscheibe zugestellt werden. Beim Lösen wird der Betrag dieses Vorhubs wieder durch Zurückdrehen der Gewinderohre durch die Schaltscheibe zurückgestellt.

Die Axialfeder wirkt als elastischer Kraftspeicher und kann in beiden Drehrichtungen gespannt werden. Die so in ihr gespeicherte Kraft wird verwendet, um bei einer Rückstellung eine Überlagerung von Drehbewegungen der Gewinderohre zu erhalten. Bei der Überlagerung kann je nach vorheriger Drehrichtung des Spannvorgangs eine Addition oder Subtraktion der Drehbewegungen erfolgen, um so das festgelegte Lüftspiel wieder einzustellen.

In noch einer Ausführung ist die Axialfeder als eine axial elastisch vorgespannte Rampenkupplung ausgebildet, was einen kompakten Aufbau ergibt.

Die Axialfeder kann mittels Scheiben, vorzugsweise DLC-(Diamond Like Carbon) Scheiben einstellbar sein.

In einer weiteren Ausführung weist die Nachstelleinrichtung eine Schaltgabel als Antriebselement und Bestandteil des Antriebs auf, wobei die Schaltgabel zur Zusammenwirkung mit einem Betätiger des Antriebs vorgesehen ist. Weiterhin weist die Nachstelleinrichtung eine mit dem Antriebselement zusammenwirkende Überlastkupplung mit einem Freilauf auf. Diese Überlastkupplung kann z.B. eine Kugelkonuskupplung sein und mittels Scheiben, vorzugsweise DLC-(Diamond Like Carbon) Scheiben einstellbar sein.

In einer Ausführung kann die Nachstelleinrichtung eine herkömmliche Nachstelleinrichtung sein, die an die gesamte Verschleißnachstellvorrichtung anpassbar ist.

In einer anderen Ausführung weisen die Nachstelleinrichtung und die Rückstelleinrichtung jeweils ein Synchronrad zur Zusammenwirkung mit einer Synchroneinrichtung der Scheibenbremse auf. Damit ist eine synchrone Verdrehung der Gewinderohre ermöglicht. Die Synchroneinrichtung kann Synchronmittel, z.B. Ketten, Zahnriemen, Synchronwellen mit Kronenradverzahnung oder Kegelradverzahnung, u.dgl. aufweisen.

In einer noch weiteren Ausführung weist die Verschleißnachstellvorrichtung einen Verschleißsensor auf, der zur Überwachung des Lüftspiels vorgesehen ist. Aufgrund der erfindungsgemäßen Verschleißnachstellvorrichtung kann dieser Verschleißsensor nicht nur den Verschleiß, sondern auch das aktuelle Lüftspiel erfassen.

Eine Scheibenbremse mit zwei Spindeleinheiten und einer Synchroneinheit ist so ausgebildet, dass die Nachstelleinrichtung der Verschleißvorrichtung in die eine der beiden Spindeleinheiten der Scheibenbremse und die Rückstelleinrichtung in die andere der beiden Spindeleinheiten der Scheibenbremse eingesetzt sind. Somit bietet diese Zweistempelbauart der Scheibenbremse besonders günstige Voraussetzungen für die erfindungsgemäße Verschleißnachstellvorrichtung, da keine bis nur geringe Änderungen, insbesondere hinsichtlich der Baugröße der Scheibenbremse, notwendig sind.

In einer Ausführung weist ein Antrieb der Nachstelleinrichtung eine Schaltgabel der Nachstelleinrichtung und einen Betätiger der Zuspannvorrichtung, vorzugsweise des Drehhebels auf, und ein Antrieb der Rückstelleinrichtung weist eine Schaltscheibe der Rückstelleinrichtung und einen Betätiger der Zuspannvorrichtung, vorzugsweise des Drehhebels, auf, wobei die Betätiger miteinander gekoppelt sind, was eine platzsparende Bauweise ergibt.

Hier bietet sich die Möglichkeit in einer Spindeleinheit die zustellend wirkende übliche Nachstelleinrichtung anzuordnen, und in der zweiten Spindeleinheit die rückstellend und Lüftspiel vergrößernd wirkende Rückstelleinrichtung einzusetzen. Das Prinzip mit solchen zwei getrennt voneinander wirkenden Justageeinrichtungen ist jedoch prinzipiell auch bei Einstempelbremsen anwendbar.

Die Erfindung wird nun anhand beispielhafter Ausführungen mit Bezug auf die beigefügten Zeichnungen näher erläutert. Hierbei zeigen:
- Fig. 1: eine schematische Schnittansicht einer Scheibenbremse nach dem Stand der Technik;
- Fig. 2: eine schematische Schnittansicht einer erfindungsgemäßen Scheibenbremse mit einer erfindungsgemäßen Verschleißnachstellvorrichtung;
- Fig. 3: eine schematische Draufsicht einer Schaltgabel;
- Fig. 4: eine schematische Draufsicht einer Schaltscheibe; und
- Fig. 5 bis 7: grafische Darstellungen von Bewegungskurven der Schaltscheibe nach Fig. 3 und Gewinderohren.

Fig. 1 wurde bereits oben beschrieben. Im Weiteren wird, wo erforderlich, Bezug auf Fig. 1 und die zugehörigen Erläuterungen genommen.

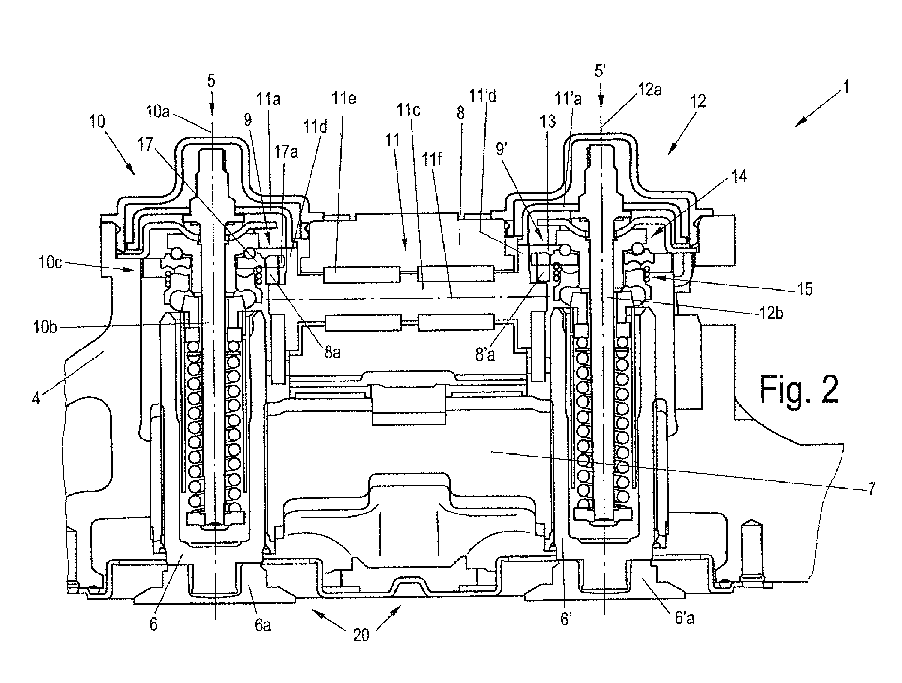

In Fig. 2 ist eine schematische Schnittansicht einer erfindungsgemäßen Scheibenbremse 1 mit einer erfindungsgemäßen Verschleißnachstellvorrichtung 20 dargestellt.

Ein Grundaufbau der erfindungsgemäßen Scheibenbremse 1 ist ähnlich dem Grundaufbau der Scheibenbremse 1 nach dem Stand der Technik aus Fig. 1. Eine Bremsscheibe 2 und Bremsbeläge 3 sind in Fig. 2 nicht gezeigt, aber im Zusammenhang mit Fig. 1 leicht vorstellbar. Der Bremssattel 4 ist ebenfalls wie in Fig. 1 gezeigt, ein Schiebesattel, aber nicht auf eine solche Ausführung beschränkt. Der Drehhebel 8 steht wie in Fig. 1 mit der Traverse 7 in Zusammenwirkung. In Fig. 2 sind die Gewinderohre 6, 6' im Längsschnitt dargestellt.

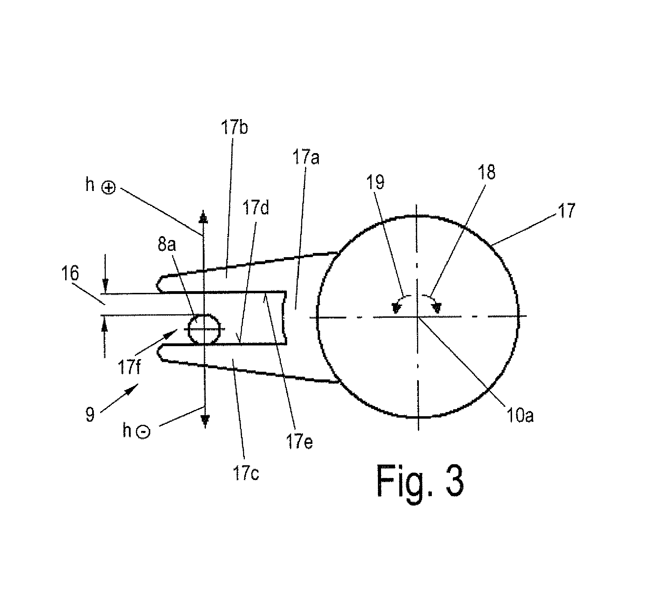

Die erfindungsgemäße Verschleißnachstellvorrichtung 20, die unten noch ausführlich beschrieben wird, ist zur Einstellung eines vorher festgelegten Lüftspiels ausgebildet. Unter dem Begriff "Einstellung" ist sowohl eine Lüftspielverkleinerung als auch eine Lüftspielvergrößerung zu verstehen. Das vorher festgelegte Lüftspiel ist durch die Geometrie der Scheibenbremse 1 bestimmt und weist ein so genanntes konstruktives Lüftspiel 16 (siehe Fig. 3) auf. Mit anderen Worten, die Verschleißnachstellvorrichtung 20 verkleinert ein Lüftspiel, wenn dieses in Bezug auf ein das vorher festgelegte Lüftspiel zu groß ist. Und sie vergrößert ein Lüftspiel, wenn dieses in Bezug auf das vorher festgelegte Lüftspiel zu klein ist.

Die Verschleißnachstellvorrichtung 20 umfasst eine Nachstelleinrichtung 10 und eine Rückstelleinrichtung 12. Die Nachstelleinrichtung 10 ist in der einen Spindeleinheit 5 der beiden Spindeleinheiten 5, 5' eingesetzt angeordnet und weist eine Nachstellerachse 10a, welche mit einer Mittelachse der einen Spindeleinheit 5 fluchtet, und eine Nachstellerwelle 10b auf, die in ihrem oberen, zuspannseitigen Endbereich mit einem Synchronrad 11a versehen ist. Die Nachstellerwelle 10b ist an ihrem anderen Ende mit dem zugehörigen Gewinderohr 6 in nicht näher beschriebener Weise drehfest gekoppelt. Die Nachstelleinrichtung umfasst außerdem eine Überlastkupplung 10c, deren Funktion unten noch näher erläutert wird. Im Wesentlichen entspricht die Nachtstelleinrichtung 10 einem üblichen Nachsteller, deren Aufbau und Funktion z.B. in der DE 10 2004 037 771 A1 ausführlich beschrieben sind.

Die Rückstelleinrichtung 12 ist in der anderen Spindeleinheit 5' der beiden Spindeleinheiten 5, 5' eingesetzt angeordnet. Sie entspricht bis auf eine Schaltscheibe 13 mit zugehöriger Axialfeder 15 im Wesentlichen einer üblichen Nachstelleinrichtung 10 mit einer Kugelkonuskupplung 14. Die Kugelkonuskupplung 14 und die Axialfeder 15 sowie weitere Unterschiede werden unten noch ausführlich beschrieben. Eine Rückstellerachse 12a, die auch als Mitnehmerachse bezeichnet werden kann, fluchtet mit einer Mittelachse der anderen Spindeleinheit 5'. Die Rückstelleinrichtung 12 weist eine Mitnehmerwelle 12b auf, die in ihrem oberen, zuspannseitigen Endbereich mit einem Synchronrad 11'a (wie die Nachstellerwelle 10b) versehen ist. Die Mitnehmerwelle 12b ist wie die Nachstellerwelle 10b an ihrem anderen Ende mit dem zugehörigen Gewinderohr 6' in nicht näher beschriebener Weise drehfest gekoppelt.

Die erfindungsgemäße Scheibenbremse 1 weist außerdem eine Synchroneinrichtung 11 auf, mit welcher Drehbewegungen der Nachstellerwelle 10b um die Nachstellachse 10a mit Drehbewegungen der Mitnehmerwelle 12b um die Rückstellerachse 12a synchron miteinander gekoppelt sind. In diesem Beispiel weist die Synchroneinrichtung 11 dazu eine Synchronwelle 11 c auf. Die Synchronwelle 11 c ist an jedem Ende mit einem Synchronkoppelrad 11d, 11d' versehen und erstreckt sich durch den Drehhebel 8 hindurch, in welchem sie über nicht näher beschriebene Lager 11 e um ihre Längsachse, die hier als Synchronwellenachse 11f bezeichnet ist, drehbar gelagert ist. Die Synchronwellenachse 11f verläuft parallel zu einer nicht gezeigten Drehachse des Drehhebels 8 und rechtwinklig zu einer Drehachse der Bremsscheibe 2, der Nachstellerachse 10a und der Rückstellerachse 12a.

Das Synchronkoppelrad 11d an dem in Fig. 2 linken Ende der Synchronwelle 11c steht mit dem Synchronrad 11a der Nachstellerwelle 10b in Eingriff. An dem anderen Ende der Synchronwelle 11c steht das andere Synchronkoppelrad 11'd mit dem Synchronrad 11'a der Mitnehmerwelle 12b in Eingriff. Hier sind die Synchronräder 11a und 11'a z.B. mit einer Kronenradverzahnung (natürlich ist auch eine andere Verzahnung möglich, z.B. Kegelradverzahnung) ausgebildet, wobei die Synchronkoppelräder 11d und 11'd eine damit korrespondierende Verzahnung aufweisen. Die hier verwendete Synchroneinrichtung 11 bewirkt im Gegensatz zu der Synchroneinrichtung 11 mit der Kette als Synchronmittel 11b (Fig. 1), dass die Drehbewegungen von Nachstellerwelle 10b und Mitnehmerwelle 12b und der damit gekoppelten Gewinderohre 6 und 6' gegenläufig sind. In diesem Fall sind daher die Gewinderohre 6, 6' mit Außengewinden mit entgegengesetztem Gewindesinn (Rechtsgewinde/Linksgewinde) ausgeführt.

Die Nachstelleinrichtung 10 steht über den Antrieb 9 mit dem Drehhebel 8 in Zusammenwirkung. Dazu weist der Drehhebel 8 an seiner in Fig. 2 linken Stirnseite den Betätiger 8a, z.B. ein Hebelpin, auf, welcher mit dem Drehhebel 8 fest verbunden ist. Der Betätiger 8a steht mit der Schaltgabel 17a eines Antriebselementes 17 der Nachstelleinrichtung 10 in Eingriff. Dies ist in Fig. 3 in einer Draufsicht genauer zu erkennen.

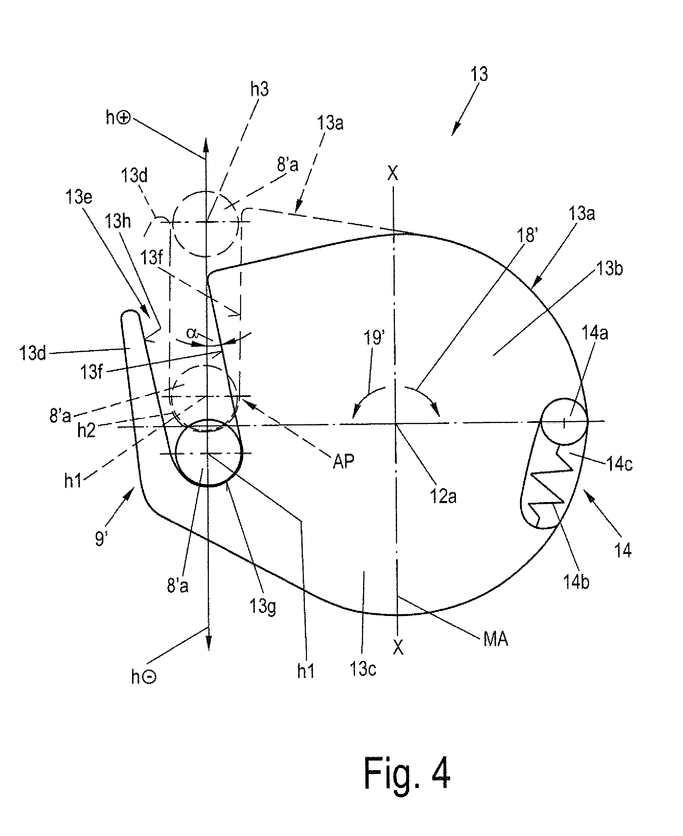

Die Rückstelleinrichtung 12 steht über einen Antrieb 9' ebenfalls mit dem Drehhebel 8 in Zusammenwirkung. Dazu ist an der anderen Stirnseite des Drehhebels 8 ein weiterer Betätiger 8'a fest angebracht. Der weitere Betätiger 8'a steht mit einer Schaltscheibe 13 der Rückstelleinrichtung 12 in Eingriff. Eine Draufsicht dazu ist in Fig. 4 dargestellt.

Eine Schwenkbewegung des Drehhebels 8 wird auch als Betätigungshub bezeichnet, da der Drehhebel 8 bei Betätigung z.B. durch einen nicht gezeigten Pneumatikzylinder einen Hub der Traverse 7 bewirkt. Dabei wird die Bewegung des Drehhebels beim Zuspannen der Bremse als Zuspannbewegung und die entgegengesetzte Bewegung als Lösebewegung der Bremse bezeichnet. Bei der Zuspannbewegung und der Lösebewegung des Drehhebels 8 wird die Nachstelleinrichtung 10 über den Antrieb 9 und die Rückstelleinrichtung 12 über den Antrieb 9' betätigt. Die jeweiligen Funktionen der Verschleißnachstellvorrichtung 20, d.h. der Nachstelleinrichtung 10 und der Rückstelleinrichtung 12, bei diesen Bewegungen in Abhängigkeit von verschiedenen Verschleißzuständen der Scheibenbremse 1 werden weiter unten noch ausführlich beschrieben. Zuvor werden die Antriebe 9' und 9 anhand der Figuren 3 und 4 noch im Detail erläutert.

Fig. 3 zeigt eine schematische Draufsicht der Schaltgabel 17a.

Die Nachstelleinrichtung 10 weist ein Antriebselement 17 auf, welches mit der Schaltgabel 17a verbunden ist und mit der Nachstelleinrichtung 10 über die Überlastkupplung 10c gekoppelt ist. Die Überlastkupplung 10c weist üblicherweise einen Freilauf auf. Die Schaltgabel 17a umfasst einen Antriebsfinger 17b und einen Ruhefinger 17c, welche sich radial von der Nachstellerachse 10a nach außen erstrecken und von einander beabstandet sind, wobei ihre Innenflanken, nämlich eine des Ruhefingers 17c und eine Arbeitsflanke 17e des Antriebsfingers 17b, eine Gabelöffnung 17e der Schaltgabel 17a bilden. Die Ruheflanke 17d und die Arbeitsflanke 17e sind hier parallel zueinander angeordnet.

Innerhalb der Gabelöffnung 17e ist der Betätiger 8a des Drehhebels 8 angeordnet. Der Betätiger 8a und die Schaltgabel 17a bilden den Antrieb 9 der Nachstelleinrichtung 10. Der Betätiger 8a ist z.B. ein Stift (oder Nocken, oder Zahn, oder dgl.) mit einem kreisförmigen Querschnitt. Ein Durchmesser des Betätigers 8a ist hier kleiner als eine Weite der Gabelöffnung 17e. Dies ist nur schematisch dargestellt. In Fig. 3 ist eine Ruhestellung bzw. unbetätigte Stellung der Scheibenbremse 1, d.h. die Scheibenbremse 1 ist gelöst, gezeigt, wobei der Betätiger 8a mit einer Seite die Ruheflanke 17d der Schaltgabel 17a kontaktiert.

Bei Verschwenkung des Drehhebels 8 bewegt sich der mit dem Drehhebel 8 fest verbundene Betätiger 8a auf einem Kreisumfangsabschnitt, der auf die Zeichnungsfläche projiziert eine Gerade ergibt, die hier als Betätigungshub h bezeichnet ist. Beim Zuspannen der Scheibenbremse bewegt sich der Betätiger 8a in positiver Richtung des Betätigungshubs h, was hier mit einem Pluszeichen angedeutet ist. Dabei löst sich der der Betätiger 8a von der Ruheflanke 17d und durchläuft zunächst einen Weg, der einem Lüftspiel 16 entspricht, bevor er die gegenüberliegende Arbeitsflanke 17e der Schaltgabel 17a kontaktiert. Dieses Lüftspiel 16 wird auch als konstruktives Lüftspiel bezeichnet. Bei weiterem Zuspannen, d.h. weiterer Verschwenkung des Drehhebels 8 verschwenkt der Betätiger 8a die Schaltgabel 17a und somit das Antriebselement 17 in einer Schwenkbewegung 18 (hier im Uhrzeigersinn) um die Nachstellerachse 10a. Ein Ablauf einer Nachstellfunktion wird unten ausführlich erläutert.

Beim Lösen der Scheibenbremse 1 verschwenkt der Betätiger 8a in negativer Richtung des Betätigungshubs h, was hier mit einem Minuszeichen angedeutet ist. Dabei führt der Betätiger 8a die Schaltgabel 17a und somit das Antriebselement 17 mit der Überlastkupplung 10c (siehe Fig. 2) wieder in die in Fig. 3 gezeigte Ruhestellung in einer Verschwenkbewegung 19 zurück. Die Verschwenkbewegung 19 verläuft entgegengesetzt zur Verschwenkbewegung 18.

In Fig. 4 ist eine schematische Draufsicht der Schaltscheibe 13 dargestellt.

Die Schaltscheibe 13 ist Bestandteil der Rückstelleinrichtung 12, wobei die Rückstelleinrichtung 12 sich von der Nachstelleinrichtung 10 u.a. durch diese Schaltscheibe 13 anstelle des Antriebselementes 17 mit Schaltgabel 17a unterscheidet. Unterhalb der Schaltscheibe 13 ist die Kugelkonuskupplung 14 (siehe auch Fig. 2) angeordnet, die hier nur schematisch mit einer Kugel 14a, einer Feder 14b und einer Kugelrampe 14c angedeutet ist. Im Unterschied zu der Überlastkupplung 10c der Nachstelleinrichtung 10 ist die Kugelkonuskupplung 14 ohne Freilauf ausgeführt, wobei sie ein Drehmoment sowohl in einer Dreh-/Schwenkrichtung im Uhrzeigersinn als auch gegen den Uhrzeigersinn übertragen kann.

Die Schaltscheibe 13 weist einen Körper 13a auf, welcher aus einem in Fig. 4 rechts angeordneten halbkreisförmigen Körperabschnitt 13b und einem damit in gleicher Ebene liegenden, verbundenen Schaltabschnitt 13c gebildet ist. Eine Mittelachse MA (Strecke X-X) ist eine gedachte Trennlinie zwischen den beiden Abschnitten 13b und 13c, wobei die Schaltscheibe 13 um die Rückstellerachse 12a verschwenkbar ist. Der Schaltabschnitt 13c erstreckt sich radial verjüngend nach links in Fig. 4 und weist in seinem links liegenden Drittel einen Steuerfinger 13d auf, der eine als Steuerkontur 13e gebildete Ausnehmung zum linken Rand des Schaltabschnitts 13c begrenzt. Die Steuerkontur 13e ist an der in Fig. 4 liegenden oberen Seite offen, wobei sie durch eine erste Steuerflanke 13f zur Mittelachse MA hin und die dazu in einem Abstand parallel angeordnete zweite Steuerflanke 13h des Steuerfingers 13d festgelegt ist. Die unteren Enden der Steuerflanken 13f und 13h sind hier durch einen halbkreisförmigen Übergang 13g verbunden, der die Steuerkontur 13e auf der der Öffnung gegenüberliegenden Seite verschließt. Die Steuerkontur 13e ist mit ihren Steuerflanken 13f, 13h geradlinig ausgebildet und in Bezug auf die Mittelachse MA in einem Winkel α nach links außen hin weisend angeordnet. Der Winkel α kann z.B. 10... 15° betragen. Andere Werte sind natürlich in Abhängigkeit von der Ausführung möglich.

In der Steuerkontur 13e der Schaltscheibe 13 ist der weitere Betätiger 8'a nahezu spielfrei zwischen den Steuerflanken 13f und 13h aufgenommen. Die Steuerkontur 13e der Schaltscheibe 13 und der weitere Betätiger 8'a bilden den Antrieb 9' der Rückstelleinrichtung 12. Der weitere Betätiger 8'a ist ebenfalls wie der oben beschriebene Betätiger 8a ausgeführt und mit dem Drehhebel 8 fest verbunden (siehe auch Fig. 2). Der weitere Betätiger 8'a bewegt sich ebenfalls bei Verschwenkung des Drehhebels 8 gleichzeitig mit dem Betätiger 8a auf einem Kreisumfangsabschnitt, der auf die Zeichnungsfläche projiziert eine Gerade ergibt, die auch hier als Betätigungshub h bezeichnet ist und parallel zu der Mittelachse MA der Schaltscheibe 13 verläuft.

Auch beim Antrieb 9' der Rückstelleinrichtung bewegt sich der Betätiger 8'a in positiver Richtung des Betätigungshubs h, was auch hier mit einem Pluszeichen angedeutet ist, und somit parallel zur Mittelachse MA. Fig. 4 zeigt den Antrieb 9', d.h. den weiteren Betätiger 8'a und die Steuerkontur 13e mit der Schaltscheibe 13, in Ruhestellung. Dies ist durch eine Stellung Betätigungshub h1 angegeben, wobei der weitere Betätiger 8'a an dem Übergang 13g der Steuerkontur 13e anliegt. Die Form des Übergangs 13g korrespondiert mit der Außenseitenform des weiteren Betätigers 8'a.

Bei Verschwenkung des Drehhebels 8 beim Zuspannen bewegt sich der Betätiger 8'a aus der Ruhestellung von h1 parallel zur Mittelachse MA in Richtung des Betätigungshubs h in Plusrichtung des Betätigungshubs h. Dabei drückt der Betätiger 8'a bei seiner Bewegung die Steuerflanke 13f zur Mittelachse MA hin, wodurch die Schaltscheibe 13 eine Schwenkbewegung 18' um die Rückstellerachse 12a (hier im Uhrzeigersinn) ausführt. Die in der Bewegungsrichtung des Betätigers 8'a begrenzende Steuerflanke 13f der Steuerkontur 13e ist so gestaltet, dass nach Ausführung eines vorgegebenen Weges des Betätigers 8'a aus der Ruhestellung bei h1 bis zu einem Wert h2, der einem Ablösepunkt AP zugeordnet ist, und damit auch nach einem vorgegebenen Schwenkwinkel, hier der Winkel α, die Steuerflanke 13f parallel zur Mittelachse MA steht. Damit steht sie auch parallel zum Betätigungshub h bzw. Verlaufsweg des weiteren Betätigers 8'a. Auch die zweite Steuerflanke 13h steht dabei parallel zur Mittelachse MA.

Die Stellung der Steuerkontur 13e in den Stellungen h2 bis h3 ist in Fig. 4 gestrichelt angedeutet, ebenso die Stellung des Betätigers 8'a in den Stellungen h2 und h3. In der Stellung h3, d.h. am Ende des Betätigungshubs h, befindet sich der weitere Betätiger 8'a in der Öffnung der Steuerkontur 13e.

Bei weiterem Zuspannen, d.h. weiterer Verschwenkung des Drehhebels 8 verschwenkt der Betätiger 8'a die Schaltscheibe 13 daher bis zum Erreichen der Stellung h3 nicht mehr und läuft in der Steuerkontur 13e zwischen den Steuerflanken 13f und 13h bis zur Stellung h3. Der vorgegebene Weg h1-h2 des weiteren Betätigers 8'a steht in Korrelation zu einem Soll-Lüftspiel der Scheibenbremse 1.

Mit anderen Worten, nach Ausführung des dem Soll-Lüftspiel entsprechenden Hebelschwenkhubs bzw. Betätigungshubs von h1 nach h2 erfolgt kein weiteres Verschwenken der Schaltscheibe 13 beim Zuspannen der Scheibenbremse 1.

Beim Lösen der Scheibenbremse 1 und somit Rückschwenken des Drehhebels 8 verschwenkt der Betätiger 8'a von h3 nach h2 in negativer Richtung des Betätigungshubs h, was hier mit einem Minuszeichen angedeutet ist, und läuft in der Steuerkontur 13e zwischen den Steuerflanken 13f und 13h. Dabei kommt der Betätiger 8'a bei Erreichen der Stellung h2 in Kontakt mit dem Übergang 13g und verschwenkt bei seinem Verlauf von h2 bis zur Ruhestellung in h1 die Schaltscheibe 13 in einer Schwenkbewegung 19' (hier gegen den Uhrzeigersinn) zurück in die in Fig. 4 gezeigte Ruhestellung.

Ein Ablauf einer Rückstellfunktion wird unten im Detail beschrieben.

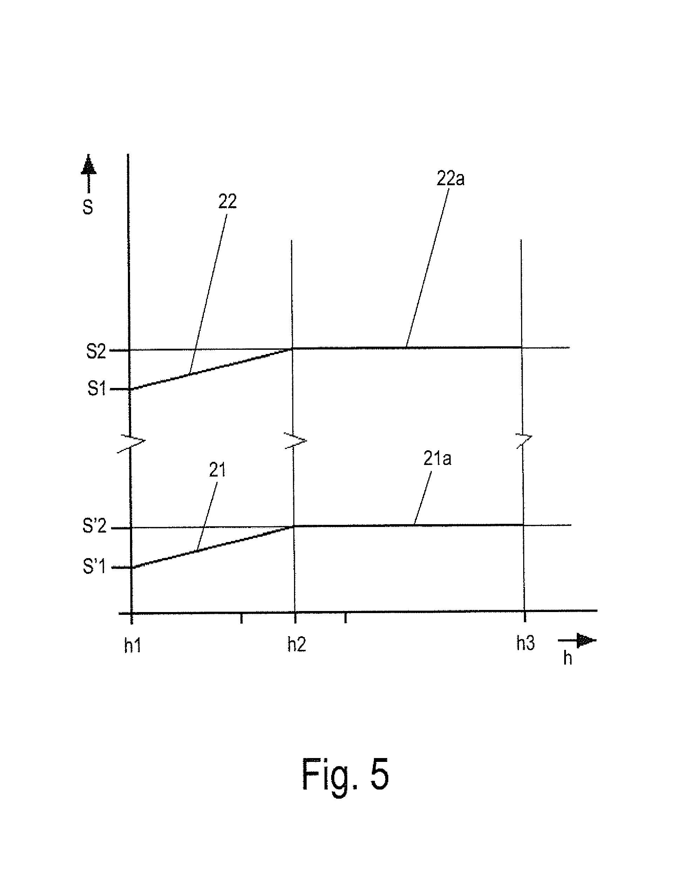

Fig. 5 bis 7 zeigen grafische Darstellungen von Bewegungskurven der Schaltscheibe nach Fig. 3 und Gewinderohren 6, 6'.

In Fig. 5 ist eine schematische grafische Darstellung eines Verstellwegs S in Abhängigkeit des Betätigungshubs h aufgetragen. Der Verschleißweg S im unteren Bereich der grafischen Darstellung ist als Umfangsweg der Schaltscheibe 13 zu verstehen (S'1-S'2) und dem Verschwenkwinkel α zugeordnet. Im oberen Bereich der grafischen Darstellung ist der Verstellweg S als Verstellweg der Gewinderohre 6, 6' zu verstehen und einem Drehwinkel der Gewinderohre 6, 6' zugeordnet.

Fig. 5 zeigt den Fall, in welchem ein Lüftspiel korrekt ist, d.h. es liegt kein verkleinertes oder vergrößertes Lüftspiel vor.

Ausgehend von der Ruhestellung beim Betätigungshub h1 bis zum Betätigungshub h2 wird Schaltscheibe 13 durch den Betätiger 8'a beim Zuspannen die von einem Ausgangswert S'1 ihres Verstellwegs (bzw. Verstellwinkels) bis zu einem Wert S'2 verschwenkt. Dies ist durch die Schaltscheibenkurve 21 gezeigt. Bei weiterer Betätigung bis zum Betätigungshub h3 wird die Schaltscheibe 13 nicht mehr verstellt, wie oben beschrieben. Dies ist durch die zur Abszisse parallel verlaufende Schaltscheibenkurve 21a verdeutlicht.

Die Verschwenkung der Schaltscheibe beim Betätigungshub h1 bis zum Betätigungshub h2 wird mittels der Kugelkonuskupplung 14 reibschlüssig auf das zugehörige Gewinderohr 6' und von diesem über die Synchroneinrichtung 11 auf das andere Gewinderohr 6 übertragen, wobei die Nachstelleinrichtung 10 bzw. die Nachstellerwelle 10b inklusive der Schaltgabel 17a verdreht wird. Auf diese Weise erfolgt in dieser so genannten Anlegephase der Scheibenbremse 1 ein Vordrehen der Gewinderohre 6, 6' und somit ein Verstellen der Bremsbeläge 3 auf die Bremsscheibe 2 zu. Dies ist durch eine Gewinderohrkurve 22 gezeigt.

Bei der Betätigung des Drehhebels 8 wird gleichzeitig auch der Betätiger 8a für die Nachstelleinrichtung 10 betätigt. Ausgehend von h1 löst sich der Betätiger 8a (siehe Fig. 3) von der Ruheflanke 17d der Schaltgabel 17a und durchläuft das konstruktive Lüftspiel 16. Die Schaltgabel 17a wird gleichzeitig von der Bewegung der Schaltscheibe 13 (siehe oben) über die Synchroneinrichtung 11 weiter verschwenkt (Schwenkbewegung 18 in Fig. 3). Bei Erreichen von h2 kommt die Bewegung der Schaltscheibe 13 zum Stillstand. Der Betätiger 8'a der Rückstelleinrichtung 12 bewegt sich weiter, ohne die Schaltscheibe 13 weiter zu verschwenken, wobei der Betätiger 8a der Nachstelleinrichtung 10 nun die Arbeitsflanke 17e der Schaltgabel 17a erreicht und diese weiter verdreht. Da die Gewinderohre 6, 6' wegen Erreichen des Anlegepunkts der Bremsbeläge 3 an der Bremsscheibe 2 sich nicht weiter bewegen, wird durch die Weiterbewegung des Betätigers 8 aufgrund des Zuspannens die Schaltgabel 17a weiter verdreht, was durch ein Überdrehen der Überlastkupplung 10c ermöglicht wird.

Beim Lösen der Scheibenbremse 1, d.h. der Betätigungshub verläuft von h3 nach h2 ohne Verschwenkung der Schaltscheibe 13. Der Betätiger 8a führt die Überlastkupplung 10c wieder zurück.

Die Schaltscheibe 13 wird erst bei Erreichen des Ablösepunktes bei h2 (siehe Beschreibung im Zusammenhang mit Fig. 4) von dem Betätiger 8'a zurückgeschwenkt (Verlauf der Schaltscheibenkurven 21 a, 21 rückwärts). Dabei dreht die Schaltscheibe 13 über die Kugelkonuskupplung 14 und die Synchroneinrichtung 11 die Gewinderohre 6, 6' zurück (Verlauf der Gewinderohrkurven 22a, 22 rückwärts) in ihre Ausgangsstellungen (S1). Auf diese Weise wird der bei der Betätigung von h1 bis h2 erfolgte, Lüftspiel und Hubbedarf reduzierende Vorhub (Vorverstellweg S1-S2) wieder rückgängig gemacht und das für den freien Lauf der Bremsscheibe 2 notwendige Lüftspiel sichergestellt.

Bei der Nachstelleinrichtung 10 durchläuft der Betätiger 8a von h2 bis h1 das konstruktive Lüftspiel 16 rückwärts und kommt an der Ruheflanke 17d zur Anlage.

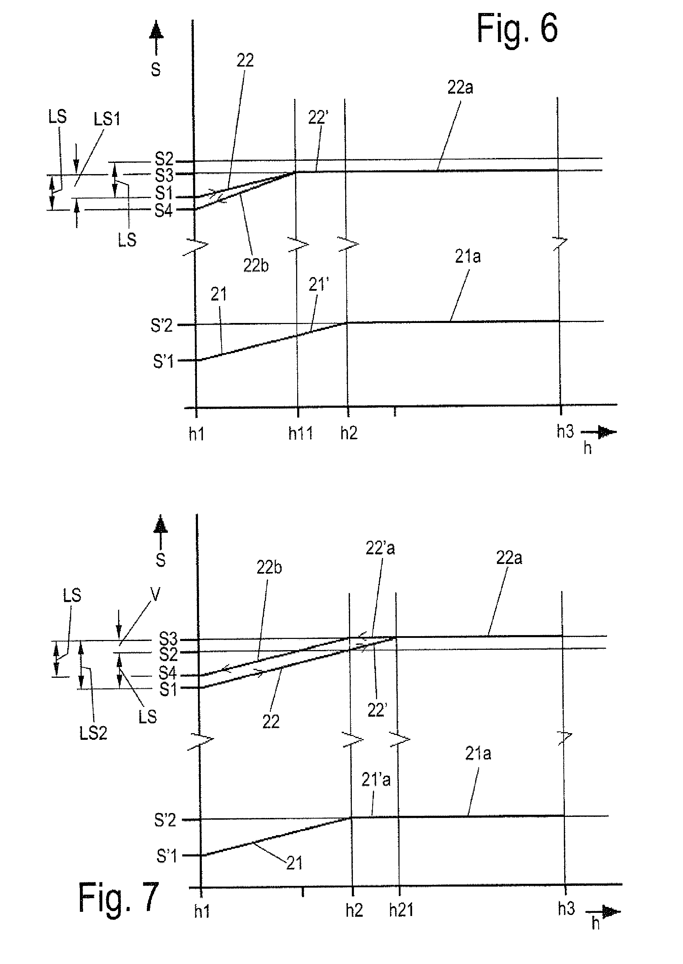

In Fig. 6 ist der Verstellweg S auch in Abhängigkeit des Betätigungshubs h aufgetragen. Der Verschleißweg S im unteren Bereich der grafischen Darstellung ist als Umfangsweg der Schaltscheibe 13 zu verstehen und dem Verschwenkwinkel α zugeordnet. Im oberen Bereich der grafischen Darstellung ist der Verstellweg S als Verstellweg der Gewinderohre 6, 6' zu verstehen, einem Drehwinkel der Gewinderohre 6, 6' und einem Lüftspiel LS zugeordnet.

Fig. 6 zeigt den Fall, in welchem das Lüftspiel LS zu gering ist.

Bei Betätigung des Drehhebels 8 beginnend mit dem Betätigungshub h1 löst sich der Betätiger 8a (Fig. 3) von der Ruheflanke 17d der Schaltgabel 17a der Nachstelleinrichtung 10 und durchläuft das konstruktive Lüftspiel 16. Gleichzeitig dreht der Betätiger 8'a der Rückstelleinrichtung 12 die Schaltscheibe 13 und die Gewinderohre 6, 6' wie im Zusammenhang mit Fig. 5 beschrieben und erzeugt dabei den oben erläuterten Vorhub (hier jedoch nur Vorverstellweg S1-S3). Bevor der Betätigungshub h2 erreicht wird, wird aufgrund des zu geringen Lüftspiels die Bremsscheibe 2 von den Bremsbelägen 3 schon eher erreicht, d.h. hier beim Betätigungshub h11.

Somit wird die Verstellung der Gewinderohre 6, 6' bei h11 geblockt, bevor der Betätiger 8a die Arbeitsflanke 17e der Schaltgabel 17a der Nachstelleinrichtung 10 (Fig. 3) erreicht. Und auch bevor der Betätiger 8'a den Ablösepunkt AP Schaltscheibe 13 bei h2 der erreicht (Fig. 4). Die Schaltscheibenkurve 21 wird dann von h11 bis h2 in der Schaltscheibenkurve 21' fortgesetzt, wobei der Betätiger 8'a die Schaltscheibe 13 gegen den Widerstand der Reibung der Kugelkonuskupplung aufgrund der geblockten Gewinderohre 6, 6' weiter bis zum Ablösepunkt AP bei h2 verschwenkt. Der Betätiger 8a schwenkt weiter bis zur Anlage an der Arbeitsflanke 17e der Schaltgabel 17a der Nachstelleinrichtung 10.

Bei weiterer Betätigung von h2 bis h3 überläuft der Betätiger 8'a die parallel zur Mittelachse MA liegende erste Steuerflanke 13f der Steuerkontur 13e der Schaltscheibe 13 (Fig. 4), und der Betätiger 8a überdreht die Überlastkupplung 10c der Nachstelleinrichtung 10.

Der Verstellweg S der Gewinderohre 6, 6' ergibt nun die Gewinderohrkurve 22 ausgehend von der Ausgangsstellung bei S1 bis zur Stellung S3 beim Betätigungshub h11. Danach schließt sich die Gewinderohrkurve 22' an, die parallel zur Abszisse bis h2 verläuft und dann in die Gewinderohrkurve 22a übergeht. Die Pfeile geben den jeweiligen Verlauf beim Zuspannen (h1 -> h2 -> h3) und beim Lösen (h3 -> h2 -> h1) an.

Beim Lösen der Scheibenbremse 1 führt der Betätiger 8a die Überlastkupplung 10c zurück, die Gewinderohre 6, 6' verbleiben in ihrer Stellung von h3 bis h2 (Gewinderohrkurve 22a). Der Betätiger 8'a erreicht den Ablösepunkt AP bei h2 vor dem Lösen der Gewinderohre 6, 6' und beginnt nun, die Schaltscheibe 13 zurückzuschwenken.

Die Rückschwenkbewegung der Schaltscheibe 13 wird bis zum Lösepunkt der Gewinderohre 6, 6' (hier beim Betätigungshub h11) gegen die Kraft der Axialfeder 15 (Fig. 2) elastisch gespeichert. Die Axialfeder 15 ist als eine axial elastisch vorgespannte Rampenkupplung ausgebildet. Die Gewinderohre 6, 6' erreichen den Lösepunkt bei h11 und der in der vorgespannten Rampenkupplung (Axialfeder 15) gespeicherte Verschwenkwinkel wird frei. Durch diese gespeicherte Kraft der Axialfeder 15, die als Rückstellfeder wirkt, werden die Gewinderohre 6, 6' nun um einen Betrag zurück verschwenkt, so dass das vorherige zu geringe Lüftspiel vergrößert wird. Die Nachstelleinrichtung 10 wird dabei zunächst einschließlich der Schaltgabel 17a gegen ein Kopfreibmoment an ihrer Einbaustelle im Bremssattel 4 verdreht.

Der Betätiger 8'a verschwenkt dann die Schaltscheibe 13 der Rückstelleinrichtung 12 und damit die Gewinderohre 6, 6' um den bei der Betätigung (h1 - h2) erzeugten Vorhub zurück, und der Betätiger 8a der Nachstelleinrichtung 10 durchläuft gleichzeitig das konstruktive Lüftspiel 16 bis zum Erreichen der Ruheflanke 17d der Schaltgabel 17a. Nach Erreichen der Ruheflanke 17d wird die Rückstellbewegung als Verdrehung der Gewinderohre 6, 6' zur blockierten Schaltgabel 17a in der Rutschkupplung 10c realisiert (Gewinderohrkurve 22b). Dabei ist ein Drehmoment der Kugelkonuskupplung 14 der Rückstelleinrichtung 12 größer als ein Drehmoment der Schaltscheibe 13 und das wiederum größer als ein Drehmoment der Rutschkupplung 10c der Nachstelleinrichtung 10.

Dann wird die Ausgangsstellung h1 erreicht.

Mit anderen Worten, aufgrund des zu geringen Lüftspiels werden die Gewinderohre 6, 6' schon beim Betätigungshub h11 vor Erreichen des konstruktiven Lüftspiels bei h2 blockiert. Beim Lösen der Scheibenbremse 1 wird die Axialfeder 15 der Rückstelleinrichtung 12 von h2 bis h11 gespannt (Schaltscheibenkurve 21'). Dies entspricht einer Differenz zwischen dem korrekten Lüftspiel und dem zu geringen Lüftspiel. Sobald die Gewinderohre 6, 6' gelöst sind (h11), werden sie durch die gespannte Axialfeder 15 um den Betrag schon zurückgedreht, der der (gespeicherten) Differenz zwischen dem korrekten Lüftspiel und dem zu geringen Lüftspiel entspricht. Dieser Verschwenkung wird die andere Verschwenkung durch die Schaltscheibe 13 überlagert, so dass eine Gesamtrückschwenkung der Gewinderohre 6, 6' eine Verstellweg ausmacht, der nicht dem Ausgangswert S1, sondern einem darunter liegenden Ausgangswert S4 entspricht.

Hierzu dient eine weitere Erläuterung im Zusammenhang mit Fig. 6, in welcher Lüftspiele den Verstellwegen S zugeordnet sind. Ein korrektes Lüftspiel LS entspricht der Differenz S2-S1. Das zu geringe Lüftspiel LS1 ergibt sich aus der Differenz S3-S1, wobei S3 dem Betätigungshub h11 zugeordnet ist. Die Differenz S2-S3 ist der Betrag, um den sich das zu geringe Lüftspiel LS1 vom korrekten Lüftspiel LS unterscheidet. Diese Differenz entspricht der Differenz h2-h11 und wird in der Axialfeder 15 gespeichert. Beim Lösen wird dann der Verstellweg S4 (Gewinderohrkurve 22b) erreicht, welcher zusammen mit dem vorherigen Verstellweg S3 das korrekte Lüftspiel LS (S3-S4 = S2-S1) wieder ergibt.

Zur Erfüllung der Drehmomentanforderungen ist die Nachstelleinrichtung 10 in Löserichtung mit einer Kugelkonuskupplung mit Freilauffunktion ausgestattet. Die Rückstelleinrichtung 12 weist jedoch in ihrer Kugelkonuskupplung 14 in beiden Drehrichtungen eine ein Drehmoment übertragende Funktion auf.

In Fig. 7 ist der Fall eines zu großen Lüftspiels dargestellt.

Bei Betätigung des Drehhebels 8 beginnend mit dem Betätigungshub h1 löst sich der Betätiger 8a (Fig. 3) von der Ruheflanke 17d der Schaltgabel 17a der Nachstelleinrichtung 10 und durchläuft das konstruktive Lüftspiel 16. Gleichzeitig dreht der Betätiger 8'a der Rückstelleinrichtung 12 die Schaltscheibe 13 und die Gewinderohre 6, 6' wie im Zusammenhang mit Fig. 5 beschrieben und erzeugt dabei den oben erläuterten Vorhub (S1-S2). Aufgrund des zu großen Lüftspiels wird die Bremsscheibe 2 von den Bremsbelägen 3 nach dem Betätigungshub h2 erreicht, d.h. hier beim Betätigungshub h21.

Somit wird die Verstellung der Gewinderohre 6, 6' bei h21 erst geblockt, nachdem der Betätiger 8a die Arbeitsflanke 17e der Schaltgabel 17a der Nachstelleinrichtung 10 (Fig. 3) erreicht hat. Der Betätiger 8a verschwenkt nun über die Schaltgabel 17a die Nachstelleinrichtung 10 bis die Gewinderohre 6, 6' bei h21 blockiert werden (Gewinderohrkurve 22'). Der Betätiger 8'a blockiert ab h2 die Schaltscheibe 13 in der Steuerkontur 13e. Die Verschwenkung des Gewinderohrs 6, die durch die Nachstelleinrichtung 10 bewirkt und durch die Synchroneinrichtung 11 auf das Gewinderohr 6' übertragen wird, wird nun durch eine Relativverdrehung durch die Rutschkupplung der Rückstelleinrichtung 12, die durch die reibschlüssige Kugelkonuskupplung 14 der Rückstelleinrichtung 12 gebildet ist, ermöglicht. Und diese Relativverdrehung wird gleichzeitig in der Axialfeder 15 (federbelastete Rampenkupplung) gespeichert. Dabei ist ein Drehmoment der Nachstelleinrichtung größer als ein Drehmoment der Schaltscheibe plus ein Drehmoment der Rutschkupplung der Kugelkonuskupplung 14.

Nach Erreichen von h21 überdreht der Betätiger 8a die Überlastkupplung 10c der Nachstelleinrichtung 10 bis h3, und der Betätiger 8'a läuft in der Steuerkontur 13e bis h3, ohne die Schaltscheibe 13 zu verschwenken.

Der Verstellweg S der Gewinderohre 6, 6' ergibt nun die Gewinderohrkurve 22 ausgehend von der Ausgangsstellung bei S1 bis zur Stellung S2 beim Betätigungshub h2. Danach verläuft die Gewinderohrkurve 22' mit gleicher Steigung. Bei h2 schließt sich die parallel zur Abszisse bis h3 verlaufende Gewinderohrkurve 22a an. Die Pfeile geben auch hier den jeweiligen Verlauf beim Zuspannen (h1 -> h2 -> h3) und beim Lösen (h3 -> h2 -> h1) an.

Beim Lösen der Scheibenbremse 1 führt der Betätiger 8a die Überlastkupplung 10c zurück von h3 bis h2 (Gewinderohrkurve 22a und 22'a). Der Betätiger 8'a erreicht den Ablösepunkt AP bei h2 beim Lösen der Gewinderohre 6, 6' und beginnt nun, die Schaltscheibe 13 zurückzuschwenken.

Die Gewinderohre 6, 6' erreichen den Lösepunkt bei h2 und der in der vorgespannten Rampenkupplung (Axialfeder 15) gespeicherte, aber im Gegensatz bei einem zu geringen Lüftspiel nun in Gegenrichtung gespeicherte Verschwenkwinkel wird frei. Durch diese gespeicherte Kraft der Axialfeder 15, die als Rückstellfeder wirkt, werden die Gewinderohre 6, 6' nun um einen Betrag weniger zurück verschwenkt, so dass das vorherige zu große Lüftspiel verringert wird.

Der Betätiger 8'a verschwenkt dann die Schaltscheibe 13 der Rückstelleinrichtung 12 und damit die Gewinderohre 6, 6' um den bei der Betätigung (h1 - h2) erzeugten Vorhub zurück (Gewinderohrkurve 22b), und der Betätiger 8a der Nachstelleinrichtung 10 durchläuft gleichzeitig das konstruktive Lüftspiel 16 bis zum Erreichen der Ruheflanke 17d der Schaltgabel 17a

Dann wird die Ausgangsstellung h1 erreicht.

Mit anderen Worten, aufgrund des zu großen Lüftspiels werden die Gewinderohre 6, 6' erst beim Betätigungshub h21 nach Erreichen des konstruktiven Lüftspiels bei h2 blockiert. Der Betätiger 8a betätigt die Nachstelleinrichtung 10 dergestalt, dass der Betrag des zu großen Lüftspiels nachgestellt wird. Beim Lösen wird nun die Axialfeder 15 der Rückstelleinrichtung 12 im Gegensatz zum Fall bei zu geringem Lüftspiel in Gegenrichtung von h21 bis h2 gespannt (Schaltscheibenkurve 21'a). Dies entspricht einer Differenz zwischen dem korrekten Lüftspiel und dem zu großen Lüftspiel. Sobald die Gewinderohre 6, 6' frei sind (h2), werden sie durch die gespannte Axialfeder 15 um den Betrag vorgedreht, der der (gespeicherten) Differenz zwischen dem korrekten Lüftspiel und dem zu großen Lüftspiel entspricht. Dieser Verschwenkung wird von der anderen Verschwenkung durch die Schaltscheibe 13 abgezogen, so dass eine Gesamtrückschwenkung der Gewinderohre 6, 6' eine Verstellweg ausmacht, der nicht dem Ausgangswert S1, sondern einem darüber liegenden Ausgangswert S4 entspricht.

Hierzu dient eine weitere Erläuterung im Zusammenhang mit Fig. 7, in welcher Lüftspiele den Verstellwegen S zugeordnet sind. Ein korrektes Lüftspiel LS entspricht der Differenz S2-S1. Das zu große Lüftspiel LS2 ergibt sich aus der Differenz S3-S2, welche einem Verschleiß V entspricht, der durch die Nachstelleinrichtung 10 nachgestellt wird. S3 ist dem Betätigungshub h21 zugeordnet. Die Differenz S3-S2 ist der Verschleiß V und der Betrag, um den sich das zu große Lüftspiel LS2 vom korrekten Lüftspiel LS unterscheidet. Diese Differenz entspricht der Differenz h21-h2 und wird in der Axialfeder 15 gespeichert. Beim Lösen wird dann der in der Axialfeder 15 gespeicherte Betrag abgezogen und der Verstellweg S4 (Gewinderohrkurve 22b) erreicht, welcher zusammen mit dem vorherigen Verstellweg S3 das korrekte Lüftspiel LS (S3-S4 = S2-S1) wieder ergibt.

Die Nachstelleinrichtung 10 verkleinert in Zusammenwirkung mit der Axialfeder 15 der Rückstelleinrichtung 12 ein zu großes Lüftspiel. Die Rückstelleinrichtung 12 vergrößert ein zu kleines Lüftspiel ebenfalls mit der Axialfeder 15. In beiden Fällen ermöglicht die Schaltscheibe 13, dass die Axialfeder 15 jeweils in der richtigen Verschwenkrichtung gespannt wird. Außerdem wird durch die Schaltscheibe 13 der Vorhub der Gewinderohre 6, 6' und dessen Rückstellung ermöglicht. Bei korrektem Lüftspiel erfolgt weder eine Nachstellung noch eine Rückstellung.

In einer weiteren Ausführung, die nicht dargestellt, aber leicht vorstellbar ist, kann die Verschleißnachstellvorrichtung 20 eine Nachstelleinrichtung 10 zusammen mit einer Rückstelleinrichtung 12 aufweisen, die in kompakter Bauform auf einer Achse, z.B. auf der Nachstellerachse 10a, hintereinander in Reihe angeordnet sind. Dabei sind die Antriebe 9 und 9' z.B. übereinander angeordnet und gekoppelt, wobei diese kompakte Verschleißnachstellvorrichtung 20 in einer Spindeleinheit 5, 5' eingesetzt ist. Die Synchroneinrichtung 11 dient wie üblich zur Synchronisierung der Nachsteller-/Rückstellerwelle 10b mit der Mitnehmerwelle 12b. Natürlich kann diese kompakte Verschleißnachstellvorrichtung 20 auch separat neben einer Spindeleinheit 5, 5' oder zwischen diesen angeordnet sein.

Die Erfindung ist nicht auf die oben beschriebenen Ausführungsbeispiele beschränkt. Die Erfindung ist im Rahmen der beigefügten Ansprüche modifizierbar.

So ist es z.B. denkbar, dass die Steuerkontur 13e der Schaltscheibe 13 nicht geradlinig ausgebildet ist, sondern auch zumindest teilweise einen Kurvenverlauf aufweist.

Durch die so genannte Schnellanlegefunktion wird eine Verringerung des Hubbedarfs der Scheibenbremse 1 erzielt. Je nach Auslegung kann eine Verminderung eines Zylinderhubs, z.B. eines Druckluftzylinders, von 3 bis 5 mm erzielt werden. Eine weitere Verminderung des Hubbedarfs ergibt sich aus der Möglichkeit, generell ein kleineres Lüftspiel einzustellen, da eine Lüftspielverkleinerung, z.B. durch so genanntes Belagwachsen, durch die Rückstellerfunktion kompensiert wird. In der Summe sind damit Verminderungen des Zylinderhubs von ca. 10 mm möglich.

Mit der Schnellanlegefunktion ist auch die Möglichkeit einer Lüftspielüberwachung durch die vorhandene Nachstelleinrichtung 10 möglich. Der bei der Betätigung erzeugte Vordrehwinkel bzw. Vorverstellweg (S1-S2) wird von einem der Nachstelleinrichtung 10 zugeordneten bzw. mit dieser gekoppelten, hier nicht gezeigten, Verschleißsensor erfasst. Eine Lüftspielverkleinerung hat eine Verringerung dieses Vordrehwinkels bzw. Vorverstellwegs (S1-S2) zur Folge, was bei ausreichender Auflösung des Sensorsignals erkannt wird. Der Verschleißsensor liefert im nicht betätigten Zustand der Scheibenbremse das Verschleißsignal und beim Betätigen das Lüftspielsignal. Hierbei können jedoch nur Lüftspielverkleinerungen identifiziert werden.

Die Drehmomentanforderungen können durch unterschiedliche Scheiben zur Einstellung der jeweiligen Axialfedern eingestellt werden. Für besonders reibungsarme Scheibenwerkstoffe kann vorzugsweise ein DLC-(Diamond Like Carbon) verwendet werden.

Die Nachstelleinrichtung 10 und die Rückstelleinrichtung 12 können auch in einer mittig zwischen den Spindeleinheiten 5, 5' angeordneten gemeinsamen Vorrichtung mit einer zusätzlichen Schaltebene, d.h. mit der Schaltscheibe 13 realisiert werden. Eine solche gemeinsame Anordnung in einer Vorrichtung kann eine gemeinsame Welle aufweisen, auf welcher die Antriebe 9 und 9' übereinander angeordnet sind.

Auch bei Einstempelbremsen können die Nachstelleinrichtung 10 und die Rückstelleinrichtung 12 getrennt oder auch gemeinsam in einer Vorrichtung eingesetzt werden.

### Bezugszeichenliste

- 1: Scheibenbremse
- 2: Bremsscheibe
- 3: Bremsbelag
- 4: Bremssattel
- 5, 5': Spindeleinheit
- 6, 6': Gewinderohr
- 6a, 6'a: Druckstück
- 7: Traverse
- 8: Drehhebel
- 8a, 8'a: Betätiger
- 9, 9': Antrieb
- 10: Nachstelleinrichtung
- 10a: Nachstellerachse
- 10b: Nachstellerwelle
- 10c: Überlastkupplung
- 11: Synchroneinrichtung
- 11a, 11'a: Synchronrad
- 11b: Synchronmittel
- 11c: Synchronwelle
- 11d, 11'd: Synchronkoppelrad
- 11e: Lager
- 11f: Synchronwellenachse
- 12: Rückstelleinrichtung
- 12a: Rückstellerachse
- 12b: Mitnehmerwelle
- 13: Schaltscheibe
- 13a: Körper
- 13b: Körperabschnitt
- 13c: Schaltabschnitt
- 13d: Steuerfinger
- 13e: Steuerkontur
- 13f: Erste Steuerflanke
- 13g: Übergang
- 13h: Zweite Steuerflanke
- 14: Kugelkonuskupplung
- 14a: Kugel
- 14b: Feder
- 14c: Kugelrampe
- 15: Axialfeder
- 16: Lüftspiel
- 17: Antriebselement
- 17a: Schaltgabel
- 17b: Arbeitsfinger
- 17c: Ruhefinger
- 17d: Ruheflanke
- 17e: Arbeitsflanke
- 17f: Gabelöffnung
- 18, 18'; 19, 19': Schwenkbewegung
- 20: Verschleißnachstellvorrichtung
- 21, 21', 21a, 21'a: Schaltscheibenkurve
- 22, 22', 22a, 22'a, 22b: Gewinderohrkurve
- α: Winkel
- AP: Ablösepunkt
- h; h1, h2, h3, h11, h21: Betätigungshub
- LS, LS1, LS2: Lüftspiel
- MA: Mittelachse
- s, s1, s2, s'1, s'2: Verstellweg
- V: Verschleiß

## Patentansprüche

1. Verschleißnachstellvorrichtung (20) zur Einstellung eines vorher festgelegten Lüftspiels für eine Scheibenbremse (1), insbesondere für ein Kraftfahrzeug, mit einer Zuspannvorrichtung, vorzugsweise mit einem Drehhebel (8), wobei die Verschleißnachstellvorrichtung (20) mit der Zuspannvorrichtung, vorzugsweise mit dem Drehhebel (8), koppelbar und vorzugsweise in eine Spindeleinheit (5, 5') der Scheibenbremse (1) einsetzbar ist,
**dadurch gekennzeichnet,**
**dass** die Verschleißnachstellvorrichtung (20) eine Nachstelleinrichtung (10) und eine Rückstelleinrichtung (12) aufweist, wobei die Nachstelleinrichtung (10) ein Lüftspiel verkleinert, wenn dieses in Bezug auf das vorher festgelegte Lüftspiel zu groß ist, und ein Lüftspiel vergrößert, wenn dieses in Bezug auf das vorher festgelegte Lüftspiel zu klein ist.

2. Verschleißnachstellvorrichtung (20) nach Anspruch 1, **dadurch gekennzeichnet, dass** ein Antrieb (9) der Nachstelleinrichtung (10) und ein Antrieb (9') der Rückstelleinrichtung (12) gemeinsam mit der Zuspannvorrichtung, vorzugsweise mit dem Drehhebel (8), koppelbar sind.

3. Verschleißnachstellvorrichtung (20) nach Anspruch 2, **dadurch gekennzeichnet, dass** die Rückstelleinrichtung (12) eine Schaltscheibe (13) aufweist, welche Bestandteil des Antriebs (9') der Rückstelleinrichtung (12) ist.

4. Verschleißnachstellvorrichtung (20) nach Anspruch 3, **dadurch gekennzeichnet, dass** die Schaltscheibe (13) mit einer Steuerkontur (13e) versehen ist, die zur Zusammenwirkung mit einem Betätiger (8'a) des Antriebs (9') vorgesehen ist.

5. Verschleißnachstellvorrichtung (20) nach Anspruch 4, **dadurch gekennzeichnet, dass** die Steuerkontur (13e) geradlinig mit parallel zueinander verlaufenden Steuerflanken (13f, 13h) ausgebildet und in Bezug auf eine Mittelachse (MA) der Schaltscheibe (13) in einem Winkel (α), der vorzugsweise 10... 15° beträgt, angeordnet ist, wobei die Mittelachse (MA) der Schaltscheibe (13) parallel zu einer Geraden verläuft, die durch eine Bewegung des Betätigers (8'a) auf eine Fläche projiziert ist.

6. Verschleißnachstellvorrichtung (20) nach Anspruch 3 oder 4, **dadurch gekennzeichnet, dass** die Rückstelleinrichtung (12) weiterhin eine reibschlüssige Kugelkonuskupplung (14), die mit der Schaltscheibe (13) gekoppelt ist, und eine Axialfeder (15) aufweist.

7. Verschleißnachstellvorrichtung (20) nach Anspruch 6, **dadurch gekennzeichnet, dass** die Axialfeder (15) als eine axial elastisch vorgespannte Rampenkupplung ausgebildet ist.

8. Verschleißnachstellvorrichtung (20) nach Anspruch 6 oder 7, **dadurch gekennzeichnet, dass** die Axialfeder (15) mittels Scheiben, vorzugsweise DLC-(Diamond Like Carbon) Scheiben einstellbar ist.

9. Verschleißnachstellvorrichtung (20) nach einem der Ansprüche 2 bis 8, **dadurch gekennzeichnet, dass** die Nachstelleinrichtung (10) eine Schaltgabel (17a) als Antriebselement (17) und Bestandteil des Antriebs (9) aufweist, wobei die Schaltgabel (17a) zur Zusammenwirkung mit einem Betätiger (8a) des Antriebs (9) vorgesehen ist.

10. Verschleißnachstellvorrichtung (20) nach Anspruch 9, **dadurch gekennzeichnet, dass** die Nachstelleinrichtung (10) eine mit dem Antriebselement (17) zusammenwirkende Überlastkupplung (10c) mit einem Freilauf aufweist.

11. Verschleißnachstellvorrichtung (20) nach Anspruch 10, **dadurch gekennzeichnet, dass** die Überlastkupplung (10c) der Nachstelleinrichtung (10) mittels Scheiben, vorzugsweise DLC-(Diamond Like Carbon) Scheiben einstellbar ist.

12. Verschleißnachstellvorrichtung (20) nach einem der vorhergehenden Ansprüche, **dadurch gekennzeichnet, dass** die Nachstelleinrichtung (10) und die Rückstelleinrichtung (12) jeweils ein Synchronrad (11a, 11'a) zur Zusammenwirkung mit einer Synchroneinrichtung (11) der Scheibenbremse (1) aufweisen.

13. Verschleißnachstellvorrichtung (20) nach einem der vorhergehenden Ansprüche, **dadurch gekennzeichnet, dass** die Verschleißnachstellvorrichtung (20) einen Verschleißsensor aufweist, der zur Überwachung des Lüftspiels vorgesehen ist.

14. Scheibenbremse (1), vorzugsweise druckluftbetätigt, insbesondere für ein Kraftfahrzeug, mit einer Zuspannvorrichtung, vorzugsweise mit einem Bremsdrehhebel (8), mindestens einer Spindeleinheit (5, 5'), und mindestens einer Verschleißnachstellvorrichtung (20), welche mit der Zuspannvorrichtung, vorzugsweise mit dem Bremsdrehhebel (9), gekoppelt ist,
**dadurch gekennzeichnet,**
**dass** die Verschleißnachstellvorrichtung (20) nach einem der vorhergehenden Ansprüche ausgebildet ist.

15. Scheibenbremse (1) nach Anspruch 14, weiterhin aufweisend zwei Spindeleinheiten (5, 5') und eine Synchroneinheit (11), **dadurch gekennzeichnet, dass** die Nachstelleinrichtung (10) der Verschleißvorrichtung (20) in die eine der beiden Spindeleinheiten (5) der Scheibenbremse (1) und die Rückstelleinrichtung (12) in die andere der beiden Spindeleinheiten (5) der Scheibenbremse (1) eingesetzt ist.

16. Scheibenbremse (1) nach Anspruch 15, **dadurch gekennzeichnet, dass** ein Antrieb (9) der Nachstelleinrichtung (10) eine Schaltgabel (17a) der Nachstelleinrichtung (10) und einen Betätiger (8a) der Zuspannvorrichtung, vorzugsweise des Drehhebels (8) aufweist, und dass ein Antrieb (9') der Rückstelleinrichtung (12) eine Schaltscheibe (13) der Rückstelleinrichtung (12) und einen Betätiger (8a) der Zuspannvorrichtung, vorzugsweise des Drehhebels (8), aufweist, wobei die Betätiger (8a, 8'a) miteinander gekoppelt sind.
